# DEMANDE DE BREVET EUROPEEN

(11) **EP 1 387 057 A2**
(43) Date de publication de la demande: **04.02.2004**
(21) Numéro de dépôt: 03370032.9
(22) Date de dépôt: 23.07.2003
(51) Int. Cl.: F02B 25/00, F02B 33/00

(54) **Moteur à combustion interne 2 temps sans carter pompe**

(30) Priorité: 01.08.2002 FR 0209805
(71) Demandeur: Lacava, Jean-François, 59650 Villenueve d'Ascq (FR); Craeye, Christian, 59200 Tourcoing (FR)
(72) Inventeur: Lacava, Jean-François, 59650 Villenueve d'Ascq (FR); Craeye, Christian, 59200 Tourcoing (FR)

(57) **Abrégé**

L'invention consiste à remplacer l'aspiration des gaz frais et leur soufflage dans le cylindre, fonction réalisées classiquement par le carter pompe et le déplacement du piston dans le cylindre, par un remplissage de gaz frais fournis par un compresseur (2) débitant dans des canaux servant à l'orientation des veines gazeuses (5) et débouchant dans le cylindre (6) par l'intermédiaire de lumières (4) démasquées par le piston (7) de part et d'autre du point mort bas.

Un filtre à air (1) purifie l'air aspiré par le compresseur, et cet air peut éventuellement être refroidi par un échangeur de température (3) placé entre le compresseur et le cylindre.

Le cylindre est muni d'un système (11) permettant de varier la section et la durée d'ouverture de la lumière d'échappement (8).

Le carburant est injecté par un ou plusieurs injecteurs haute pression (9) à commande électrique ou électronique et est enflammé par la bougie (10). Ce dispositif permet le fonctionnement en allumage par étincelle et en allumage par compression.

Application aux moteurs à combustion interne à deux temps à injecteurs haute pression

## Description

La présente invention concerne un dispositif de moteur thermique à deux temps dont le remplissage ne fait pas appel à un carter pompe, et alimenté par le biais d'un compresseur d'air et d'une injection de carburant directe et à haute pression.

L'état actuel de la technique est représenté par la publication russe N° XP-002238519 en date de 1962 et le brevet N° DE 198 27 409 en date du 29 07 1999.

Aussi bien la publication russe N° XP-2238519 que le brevet N° DE 198 27 409 ne décrivent pas le mode d'injection haute pression et le système de balayage des gaz, ceci ayant pour résultat de rendre impossible le fonctionnement de ces dispositifs tels qu'ils sont décrits.

Pour palier à ces inconvénients, nous avons pour notre part opté pour un balayage en boucle de type « SCHNURLE » lorsque l'échappement est situé dans le cylindre, et un balayage linéaire lorsque l'échappement est situé dans la culasse.

Ce moteur est destiné à tous véhicules, qu'ils soient terrestres, maritimes ou aériens ainsi qu'à toutes applications nécessitant un moteur à combustion interne, qu'il soit à allumage commandé par étincelles ou à allumage par compression.

Dans un moteur deux temps classique, le mélange air essence ou l'air pur dans le cas d'une alimentation en carburant par injection directe, est aspiré dans le carter pompe par la dépression engendrée par la montée du piston dans le cylindre, puis ces gaz sont propulsés dans le cylindre par la descente du même piston et par le biais de canaux de transfert en nombre et disposition variables.

Même si ce moteur est balayé par de l'air pur, le fait de transiter par le carter pompe suffit à le charger avec des vapeurs de l'huile servant à la lubrification du vilebrequin, de la bielle et de l'ensemble piston cylindre.

Cette huile se retrouve évidemment dans la chambre de combustion ou elle provoque des dépôts nuisant au rendement, et de là dans l'atmosphère, ce qui empêche les deux temps de répondre aux normes anti pollution de nombreux pays.

L'invention dont il est question permet de supprimer le carter pompe, ce qui autorise un balayage et un remplissage en air pur, le carburant étant amené dans la chambre de combustion par injection directe à haute pression par le biais d'un ou plusieurs injecteurs à commande électrique ou électronique. Dans le cas d'un multicylindre ou de la présence de plusieurs injecteurs par cylindre, tous les injecteurs sont alimentés en carburant par l'intermédiaire d'un réservoir commun maintenu en pression par une pompe haute pression.

Cette invention permet de supprimer les fumées à l'échappement typiques d'un deux temps et donc de réduire les niveaux de pollution dans des proportions considérables.

Le fait de supprimer le fonctionnement par carter pompe permet de graisser l'ensemble vilebrequin, cylindre et piston non par un système classique à huile perdue, mais soit par barbotage et projection, soit par des canaux amenant l'huile sous pression aux différents points ou elle est nécessaire.

L'amélioration de la lubrification qui en découle permet d'assurer une durée de vie plus longue au moteur.

Pour obtenir un fonctionnement parfait de ce type de moteur, une centrale électronique doit gérer la courbe d'injection, la courbe d'allumage, la position de la valve à l'échappement et la pression d'alimentation de l'air.

Afin de gérer ces différents éléments, de nombreux paramètres doivent être pris en compte : température de l'air admis, température moteur, température des gaz d'échappement, régime moteur, rapport enclenché, ouverture du volet de gaz, taux d'oxyde de carbone dans les gaz brûlés, sans que cette liste soit limitative.

L'invention concerne un dispositif de moteur à combustion interne deux temps sans carter pompe, à alimentation en air pur, en allumage par compression ou en allumage commandé par étincelle remarquable en ce qu'il comprend des moyens d'alimentation en carburant par l'intermédiaire d'un ou plusieurs injecteurs (9) commandés haute pression à jet simple ou multiple, et des moyens d'alimentation en air pur par compresseur (2) par l'intermédiaire de canaux (5) débouchant dans le cylindre (6) par des lumières d'admission (4) en partie basse de manière à être totalement démasquées par le piston (7) à l'approche du point mort bas.

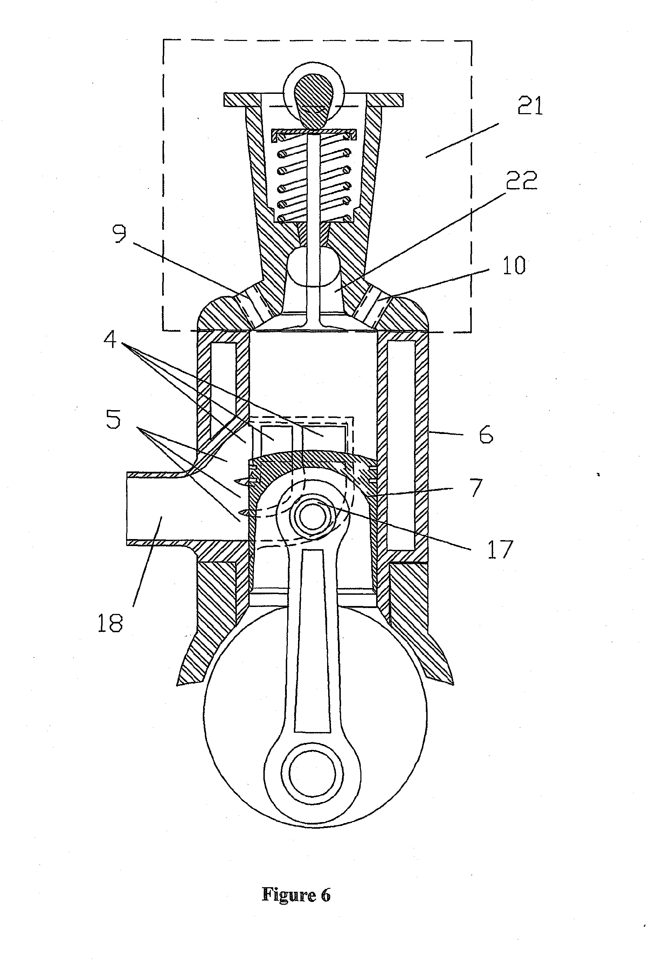

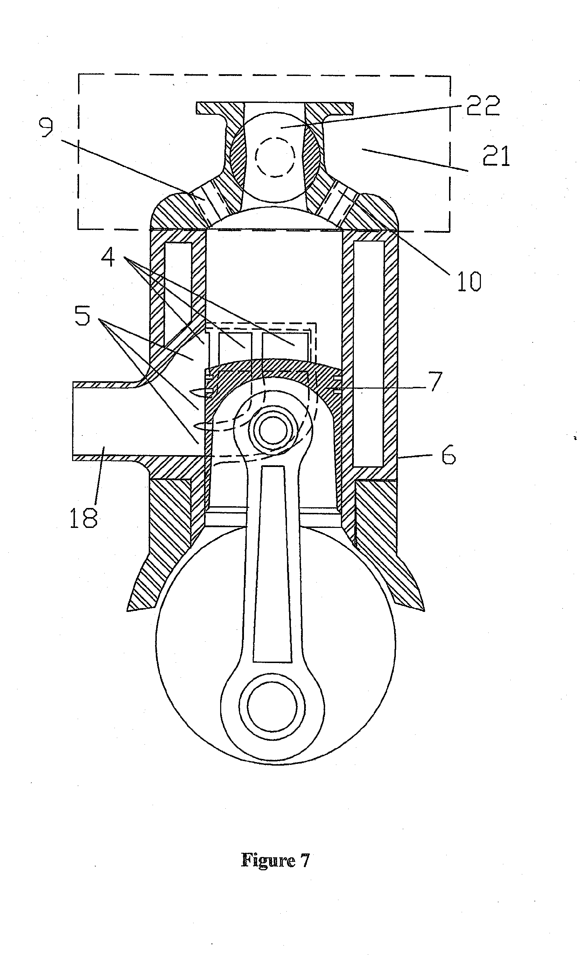

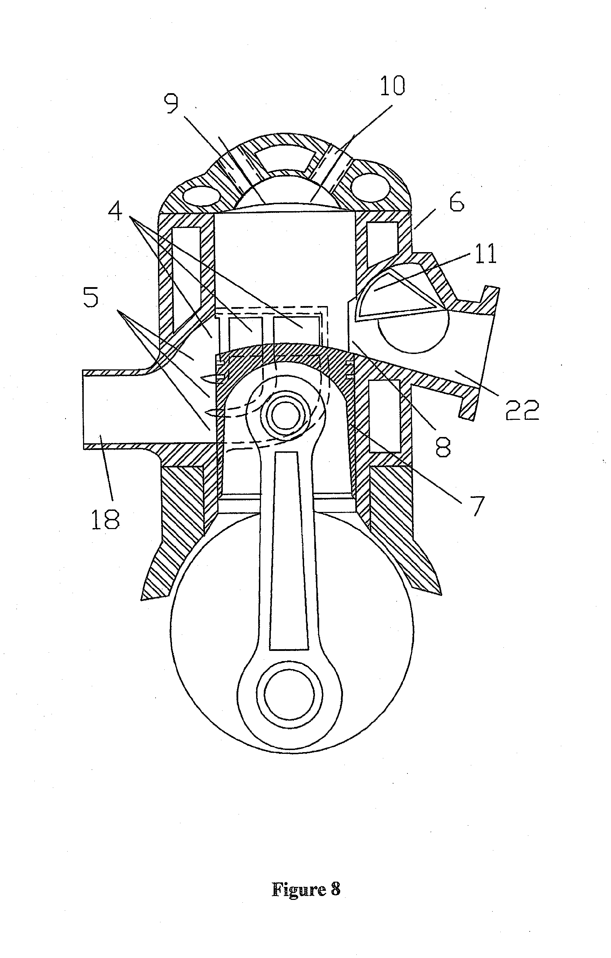

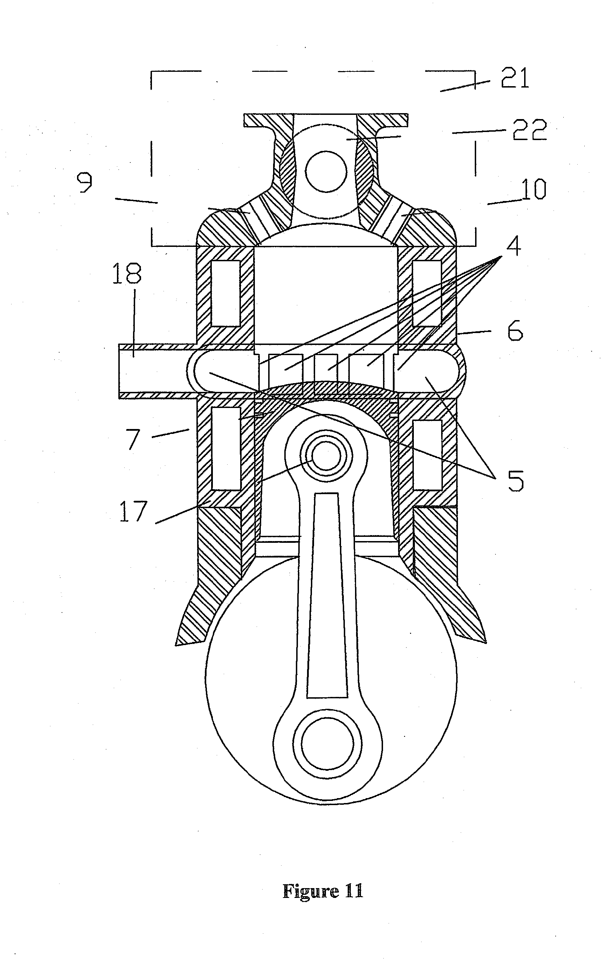

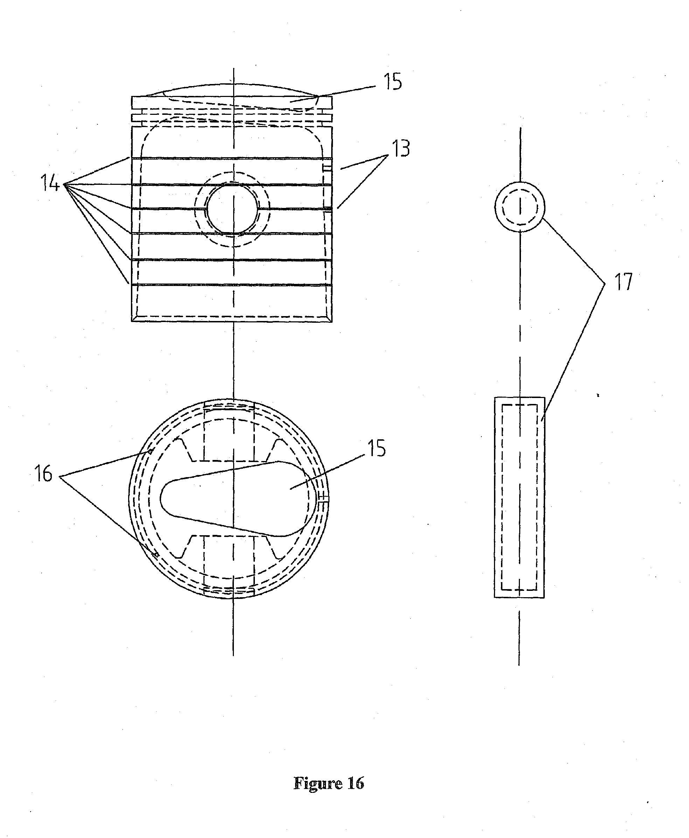

Selon des modes de réalisation particuliers:
- les canaux (5) débouchant dans le cylindre (6) par des lumières d'admission (4) sont disposées régulièrement sur la périphérie interne de la chambre (figure 11).
- le moyen d'échappement est situé dans la culasse (figures 6 et 7), et en ce que le balayage des gaz est linéaire.
- le moyen d'échappement comprend des lumières d'échappement en partie basse du cylindre, et comprend en sortie au moins un moyen (11) d'obturation partielle commandable (figure 8) dans sa partie supérieure des ses lumières de manière à obtenir une variation du diagramme de distribution, et des courbes de couple et puissance en fonction de paramètres définis par le constructeur du moteur, et en ce que le balayage des gaz est de type « SCHNURLE ».
   - au moins une lumière d'échappement est dédoublée de manière à réduire sa largeur (12) par une paroi intermédiaire à barette profilée de matière ou non, pour renforcer la structure.
   - au moins une lumière d'admission est dédoublée de manière à réduire leur largeur (12) par une paroi intermédiaire à barette profilée de matière ou non, pour renforcer la structure.
   - la jupe du piston est munie de trous traversants de petit diamètre (13) débouchant au droit des barrettes dédoublant lesdites lumières de manière à améliorer la lubrification aux endroits critiques.
   - l'extérieur de la jupe du piston supporte des rainures (14) de faible dimension et de faible profondeur, ces rainures retenant l'huile et permettant une lubrification améliorée.
   - la calotte du piston est munie d'une conformation en creux (15) servant à canaliser le carburant injecté vers le moyen d'allumage de type bougie, de manière à créer des zones de richesse différentes dans la chambre de combustion et à obtenir une combustion stratifiée.
   - les deux extrémités de l'axe de piston (17) sont obturées (figure 16).
   - ledit compresseur volumétrique pour l'air pur est utilisé à bas régime et se trouve relayé par un compresseur de type « turbo » dès que le débit des gaz d'échappement est suffisant pour entraîner ce dernier.
   - les canaux (5) par lesquels l'air en provenance du compresseur arrive aux lumières d'admission (4) ont chacun une conformation donnée destinée à orienter les flux des veines gazeuses.

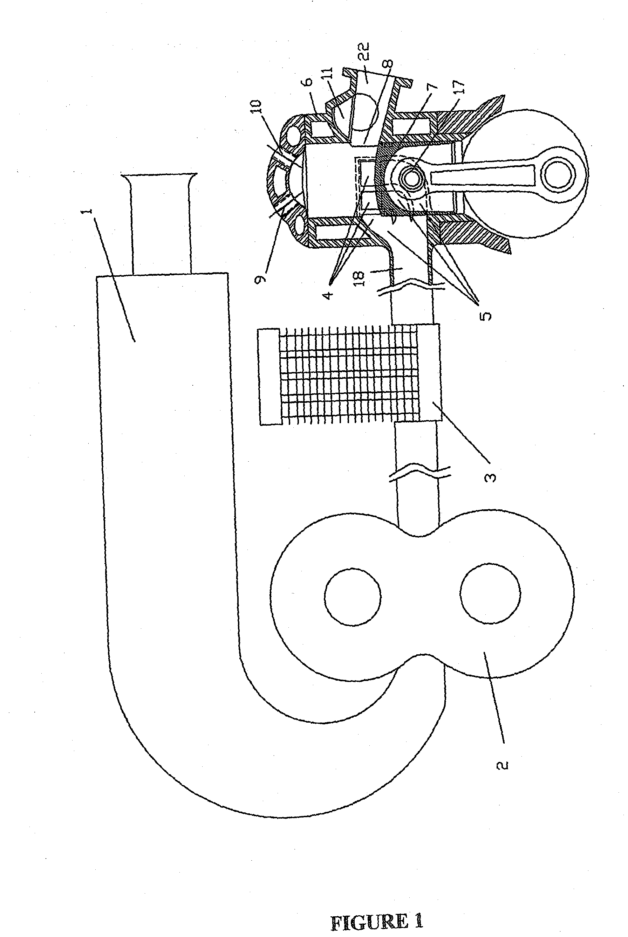

La figure 1 décrit un schéma d'ensemble avec le filtre à air (1), le compresseur volumétrique (2), l'échangeur de température (3) et le moteur.
La figure 2 décrit une configuration à échappement dans le cylindre avec un balayage de gaz en boucle.
La figure3 décrit une vue de dessus en coupe AA du cylindre avec la disposition géométrique des flux d'admission et d'échappement.
La figure 4 représente une configuration à barettes vue de dessus en section transversale de coupe AA de forme profilée plate côté cylindre.
La figure 5 représente une configuration à barettes vue de face en déroulé du cylindre avec les ouvertures d'admission et d'échappement conjointes régulièrement réparties.
La figure 6 décrit une configuration à échappement de type soupape dans la culasse avec un balayage de gaz linéaire.
La figure 7 décrit une configuration à échappement d'un autre type dans la culasse avec un balayage de gaz linéaire.
La figure 8 décrit un dispositif commandable d'obturation variable des lumières d'échappement en position légèrement obturée.
La figure 9 un dispositif commandable d'obturation variable des lumières d'échappement en position complètement ouverte avec un allumage par étincelle.
La figure 10 un dispositif commandable d'obturation variable des lumières d'échappement en position complètement ouverte, avec un allumage par compression.
La figure 11 décrit une configuration à admission périphérique en balayage linéaire par échappement par la culasse.
La figure 12 décrit une configuration à admission périphérique en balayage linéaire par échappement par la culasse avec les flux de gaz en coupe longitudinale vue de face.
La figure 13 décrit une configuration à admission périphérique en balayage linéaire par échappement par la culasse avec les flux de gaz en coupe transversale vue de dessus.
La figure 14 décrit une configuration avec des profils obliques des canaux d'admission par rapport à l'axe vertical pour améliore le guidage des veines gaseuses et donc le balayage.
La figure 15 décrit une configuration avec plusieurs tubulures amenant l'air du compresseur
La figure 16 décrit la configuration de la jupe du piston
La figure 17 décrit une barrette de dédoublement formant un arc sortant vers l'extérieur du cylindre en section longitudinale vue de côté.

Dans l'invention en question, l'air frais est aspiré dans l'atmosphère à travers un filtre à air (1) par le biais d'un compresseur volumétrique (2) entraîné par le moteur par l'intermédiaire d'une courroie crantée ou de tout autre dispositif de prise de force qui pourrait être jugé approprié par le constructeur, et qui peut éventuellement être relayé par un compresseur type « turbo » dès que les gaz d'échappement auront un débit suffisant pour l'entraîner, le compresseur volumétrique étant alors désolidarisé du moteur par un moyen quelconque. Cet air débité par le compresseur pourra être régulé en pression par un dispositif jugé nécessaire par le constructeur et pourra éventuellement être refroidi par un échangeur de température (3), puis sera envoyé dans des ouvertures (4), via des canaux (5) permettant une orientation précise du flux de gaz, et situées dans le cylindre (6) de manière à être démasquées par le piston (7) à l'approche du point mort bas.

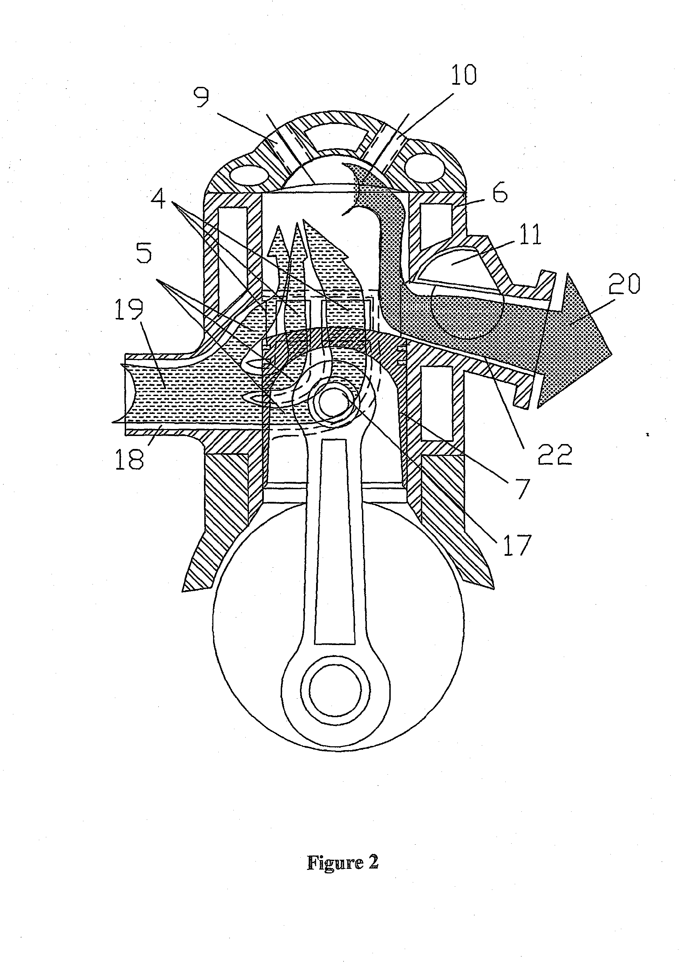

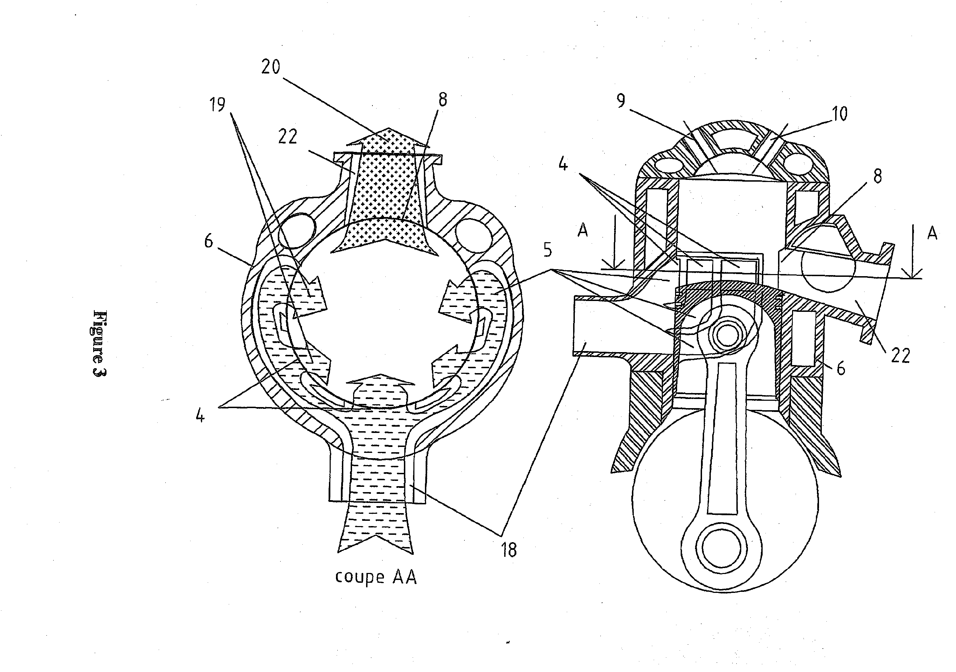

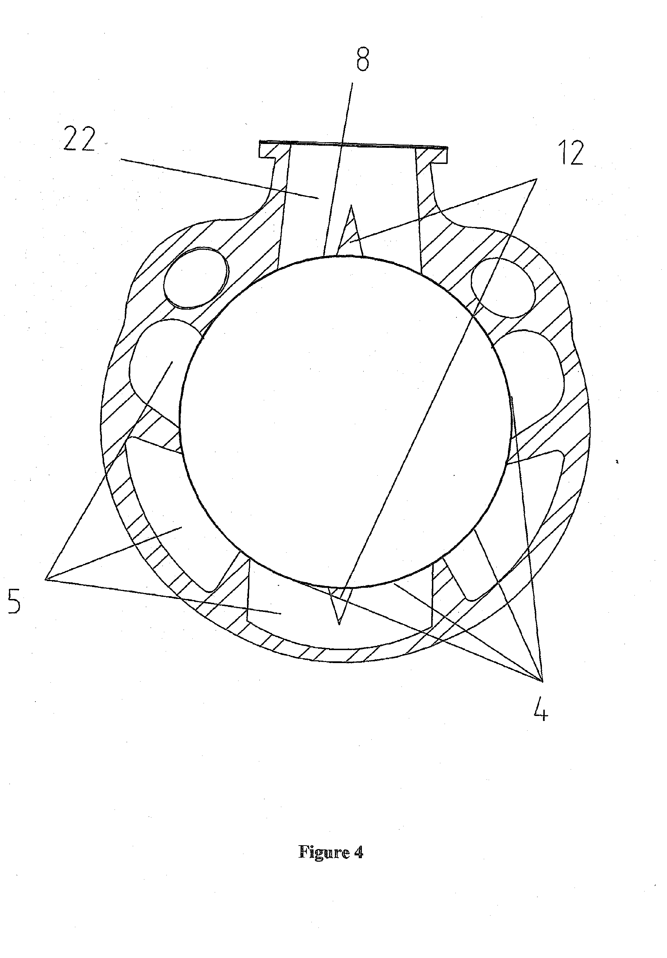

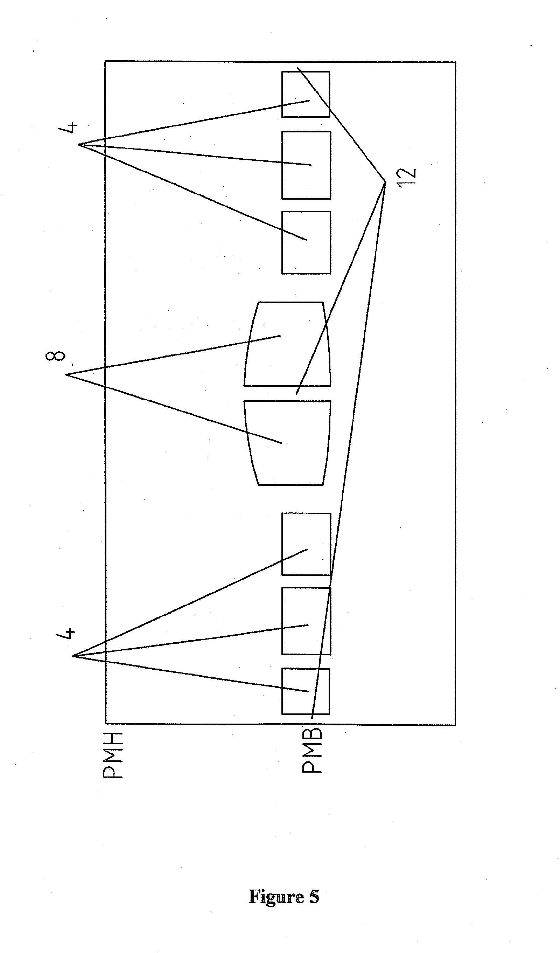

Cet air propulsé par le compresseur réalise à ce moment un balayage classique pour un deux temps (figure 2, figure 3) et pousse les gaz brûlés en les évacuant dans une ou plusieurs lumières d'échappement (8) situées-elles aussi en partie basse du cylindre. En fonction de leur largeur, ces lumières d'admission et d'échappement peuvent être munies d'une ou plusieurs barrettes (12) permettant la continuité du fut du cylindre et évitant aux segments de se prendre dans les lumières (figure 4, figure 5).

Lorsque le piston remonte, il ferme d'abord les lumières d'admission, puis l'échappement.

Une fuite de gaz frais peut se produire dans l'échappement suivant les durées respectives d'ouverture des lumières d'admission et d'échappement, mais il ne s'agit que d'air pur exempt de vapeurs de carburant et lubrifiant, et d'autre part cet air frais injecté dans l'échappement réalise une fonction d'oxydation des résidus de combustion et diminue donc les taux d'oxyde de carbone et d'hydrocarbures présents dans les gaz d'échappement L'absence de lubrifiant dans les gaz brûlés permet sur ce moteur l'utilisation d'un dispositif catalytique dit à trois voies et muni d'une sonde lambda. Cette sonde fournit une information au boîtier électronique de commande d'injection et permet d'optimiser la quantité de carburant injectée. Le carburant est injecté dans la chambre de combustion par un injecteur (9) à commande électrique ou électronique et à jet simple ou multiple alors que toutes les ouvertures permettant le balayage sont fermées, l'allumage se fait grâce à la bougie (10), le piston est chassé vers le bas, et le cycle recommence.

La calotte du piston peut être creusée (15) de manière à canaliser le carburant injecté vers la bougie, créant ainsi une zone de richesse supérieure autour de cette dernière et permettant une combustion stratifiée.

Dans un moteur de ce type, l'axe de piston (17), bien que creux doit être bouché à chaque extrémité afin de ne pas emmagasiner de gaz comprimés qui pourraient s'infiltrer dans le bas moteur et provoquer une surpression nuisible à la tenue des joints d'étanchéité (figure 16).

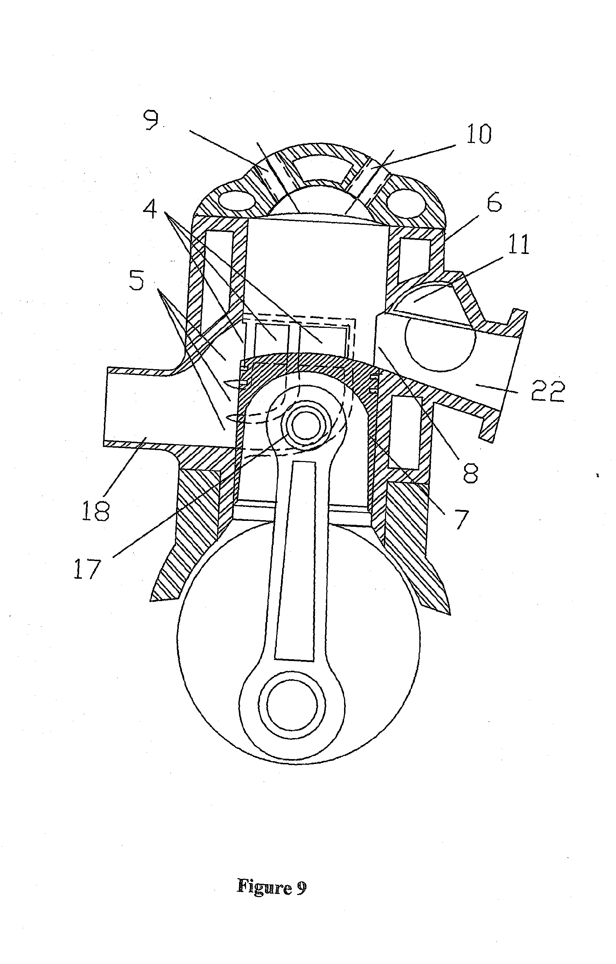

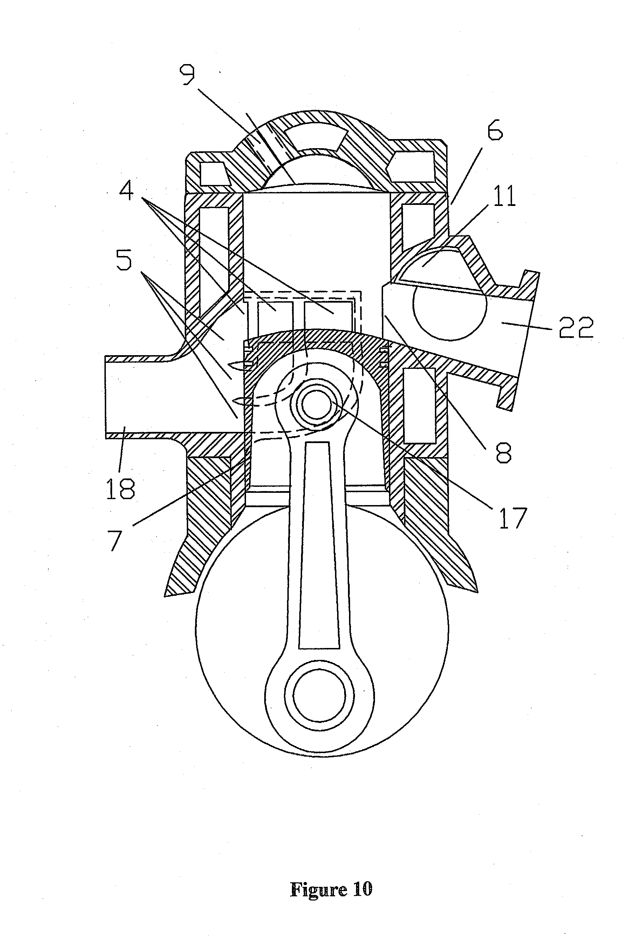

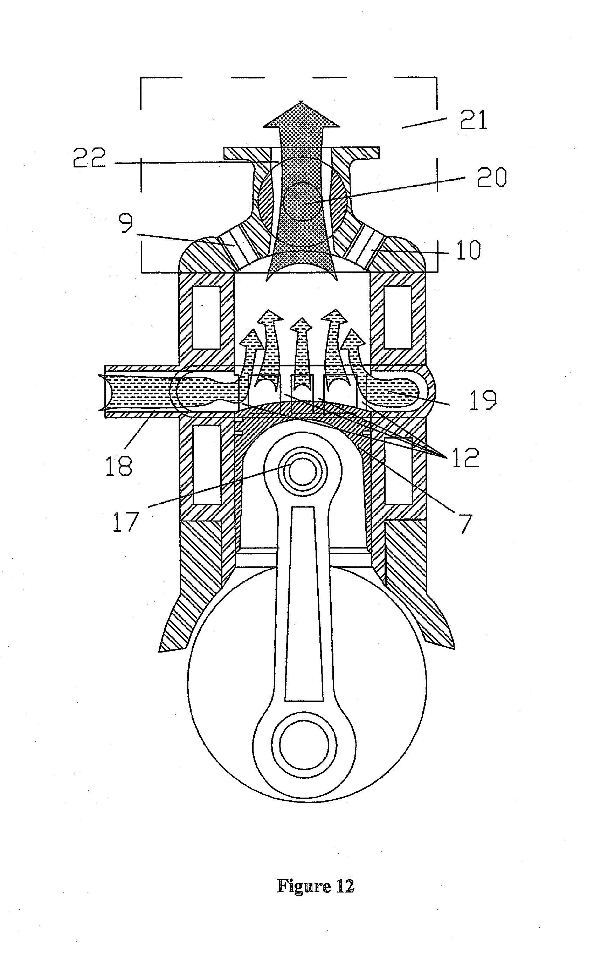

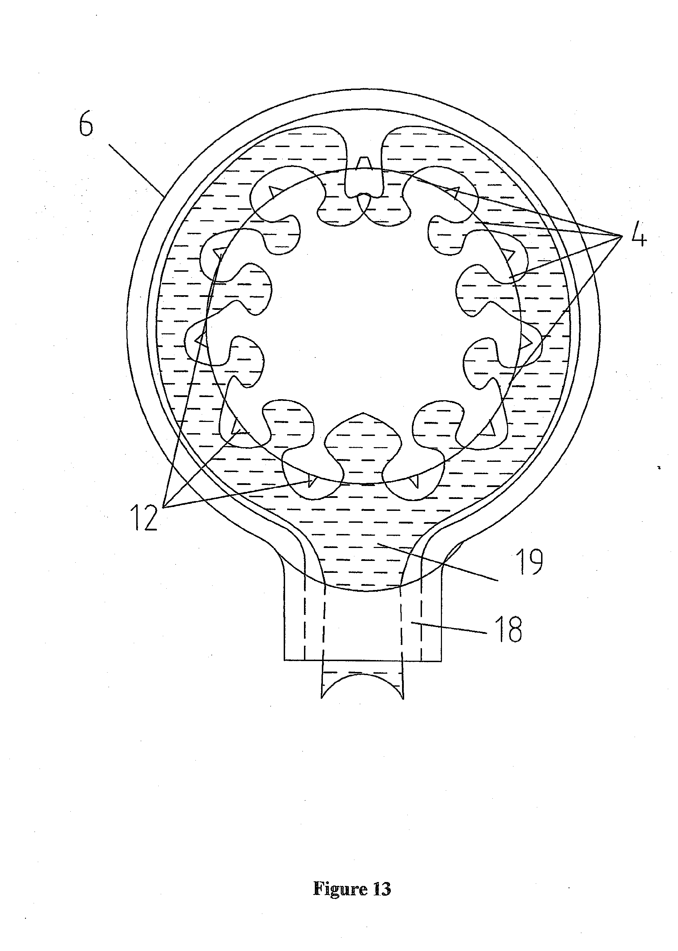

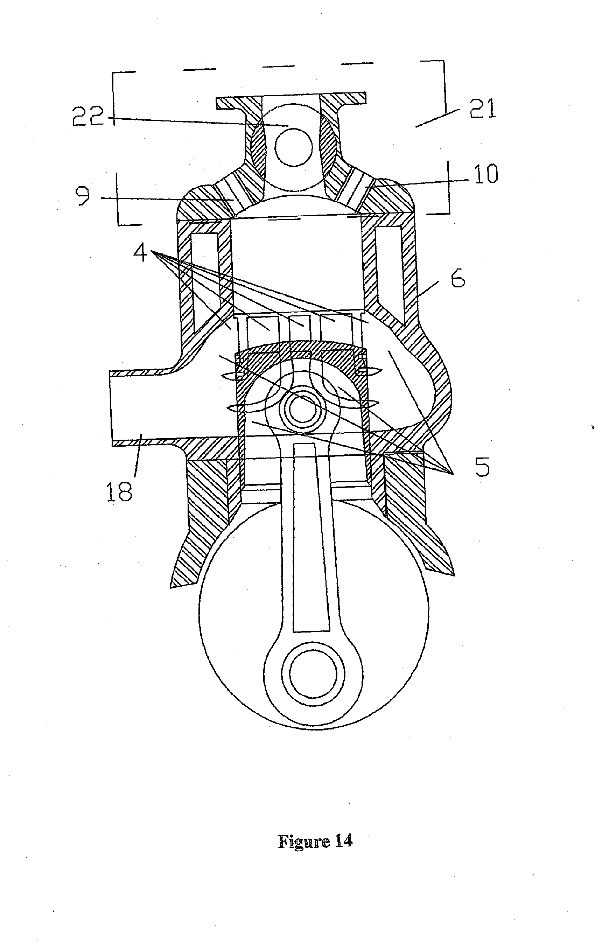

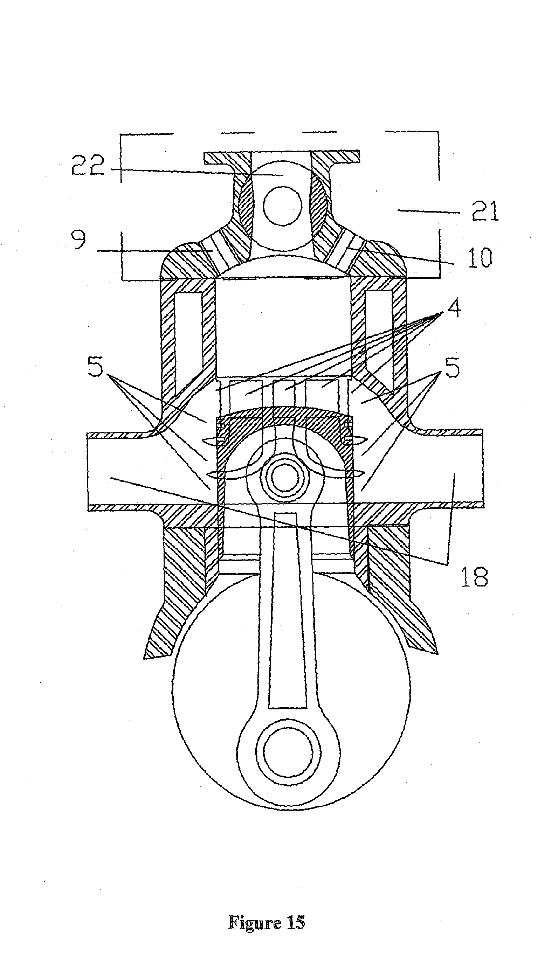

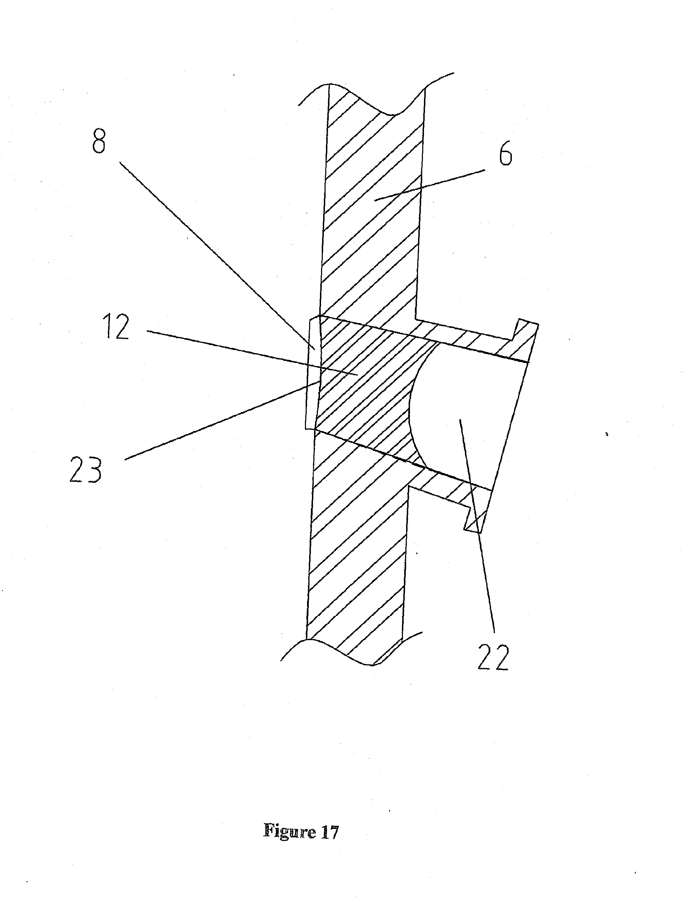

Selon des modes particuliers de réalisation :
- L'échappement peut se faire par la culasse par l'intermédiaire d'une ou plusieurs soupapes (figure 6) ou d'un dispositif quelconque (figure 7) dont l'ouverture et la fermeture sont commandées en fonction de la position du piston et / ou du régime moteur ou d'un ou plusieurs paramètres jugés nécessaire par le constructeur du moteur.
- La forme, la surface et la durée d'ouverture des lumières d'échappement peuvent éventuellement être variables en cours de fonctionnement afin de modifier le diagramme de distribution et donc les courbes de couple et de puissance grâce à un dispositif (figure 8) venant obturer en partie cette ou ces lumières (11), ceci en fonction de paramètres définis par le constructeur du moteur.
- Le moteur peut être soit de type à allumage par étincelle (figure 9), soit de type à allumage par compression (figure 10).
- Le compresseur fournissant l'air frais d'alimentation peut être de tout type jugé nécessaire par le constructeur du moteur.
- Le compresseur peut être entraîné par tout type de prise de force jugé nécessaire par le constructeur du moteur.
- Ce compresseur peut éventuellement être entraîné par un moteur électrique auxiliaire suivant les paramètres définis par le constructeur du moteur.
- Ce compresseur peut éventuellement être entraîné par l'énergie résiduelle des gaz d'échappement (compresseur type "turbo").
- Une combinaison de deux compresseurs de type différents peut être employée : un compresseur de type volumétrique étant employé à bas régime et un compresseur de type «turbo» prenant le relais dès que le débit des gaz d'échappement est suffisant pour l'entraîner, le compresseur volumétrique étant alors désolidarisé du moteur par un dispositif quelconque jugé nécessaire par le constructeur.
- Dans le cas ou le dispositif d'échappement est situé dans la culasse, les lumières d'admission peuvent être réparties sur la totalité de la périphérie du cylindre (figure 11), ceci quel que soit le type du dispositif d'échappement. Ce type d'admission est dite périphérique.
- Dans le cas d'une admission périphérique (figure 11), le balayage ne s'effectuera plus en boucle mais en linéaire (figure 12, figure 13), les gaz partant de l'admission vers l'échappement situé dans la culasse.
- Dans le cas d'une admission périphérique, les canaux d'admission peuvent comprendre une partie verticale ou inclinée (figure 14) de manière à améliorer le guidage des veines gazeuses et donc le balayage.
- Dans le cas d'une admission périphérique, la tubulure amenant l'air du compresseur peut être multiple (figure 15).
- Dans le cas d'un moteur à allumage par compression, la tubulure d'admission peut également être multiple si le dispositif d'échappement est situé dans la culasse .
- Dans le cas d'un moteur ayant son échappement dans le cylindre, la jupe du piston pourra être munie d'un ou plusieurs trous (13) traversant au droit de la barrette de dédoublement de la lumière d'échappement, ceci afin d'améliorer la lubrification à l'endroit d'échauffement maximum.
- Dans le cas d'un moteur ayant son échappement dans le cylindre par le biais d'une lumière dédoublée, la barrette de dédoublement pourra former un arc (figure 17 ) sortant vers l'extérieur sur une profondeur définie par le constructeur, de manière à compenser la dilatation causée par le passage des gaz d'échappement à haute température.
- Le piston pourra être muni sur son pourtour de rainures de faibles dimensions (14) dont l'utilité est d'améliorer la lubrification par rétention de lubrifiant. Les dimensions typiques de ces rainures sont ~ largeur +/- 0.5 mm, profondeur +/- 0.2 mm.
- La calotte du piston pourra être pourvue d'un évidement (15) destiné à canaliser le carburant injecté vers la bougie, ceci permettant de créer des zones de richesses différentes dans la culasse, et donc d'obtenir une combustion stratifiée.
- Les segments de nombre et type variable suivant les caractéristiques définis par le constructeur sont obligatoirement immobilisés en rotation dans leurs gorges par le biais d'ergots (16) afin d'éviter que leurs extrémités ne passent dans une lumière du cylindre.

### NOMENCLATURE

1) Filtre à air
2) Compresseur
3) Echangeur thermique
4) Lumières d'admission
5) Canaux d'admission
6) Cylindre
7) Piston
8) Lumières d'échappement
9) Injecteur
10) Bougie
11) Valve d'échappement
12) Barrettes de dédoublement
13) Trous de lubrification
14) Rainures dans la jupe du piston
15) Évidement dans la calotte du piston
16) Ergots de segments
17) Axe de piston
18) Tubulure d'admission
19) Trajet des gaz à l'admission
20) Trajet des gaz à l'échappement
21) Dispositif d'échappement situé dans la culasse
22) Canal d'échappement
23) Profil de la barrette d'échappement.

## Revendications

1. Dispositif de moteur à combustion interne deux temps sans carter pompe, à alimentation en air pur, en allumage par compression ou en allumage commandé par étincelle **caractérisé en ce qu'**il comprend des moyens d'alimentation en carburant par l'intermédiaire d'un ou plusieurs injecteurs (9) commandés haute pression à jet simple ou multiple, et des moyens d'alimentation en air pur par compresseur (2) par l'intermédiaire de canaux (5) débouchant dans le cylindre (6) par des lumières d'admission (4) en partie basse de manière à être totalement démasquées par le piston (7) à l'approche du point mort bas.

2. Dispositif de moteur selon la revendication 1 **caractérisé par le fait que** les canaux (5) débouchant dans le cylindre (6) par des lumières d'admission (4) sont disposées régulièrement sur la périphérie interne de la chambre (figure 11).

3. Dispositif de moteur selon l'une quelconque des revendications précédentes **caractérisé par le fait que** le moyen d'échappement est situé dans la culasse (figures 6 et 7), et en ce que le balayage des gaz est linéaire.

4. Dispositif de moteur selon l'une quelconque des revendications précédentes **caractérisé par le fait que** le moyen d'échappement comprend des lumières d'échappement en partie basse du cylindre, et comprend en sortie au moins un moyen (11) d'obturation partielle commandable (figure 8) dans sa partie supérieure des ses lumières de manière à obtenir une variation du diagramme de distribution, et des courbes de couple et puissance en fonction de paramètres définis par le constructeur du moteur, et en ce que le balayage des gaz est de type « SCHNURLE ».

5. Dispositif de moteur selon la revendication 4 **caractérisé par le fait qu'**au moins une lumière d'échappement est dédoublée de manière à réduire sa largeur (12) par une paroi intermédiaire à barette profilée de matière ou non, pour renforcer la structure.

6. Dispositif de moteur selon l'une quelconque des revendications précédentes **caractérisé par le fait qu'**au moins une lumière d'admission est dédoublée de manière à réduire leur largeur (12) par une paroi intermédiaire à barette profilée de matière ou non, pour renforcer la structure.

7. Dispositif de moteur selon la revendication 5 ou 6 **caractérisé par le fait que** la jupe du piston est munie de trous traversants de petit diamètre (13) débouchant au droit des barrettes dédoublant lesdites lumières de manière à améliorer la lubrification aux endroits critiques.

8. Dispositif de moteur selon l'une quelconque des revendications précédentes **caractérisé par le fait que** l'extérieur de la jupe du piston supporte des rainures (14) de faible dimension et de faible profondeur, ces rainures retenant l'huile et permettant une lubrification améliorée.

9. Dispositif de moteur selon l'une quelconque des revendications précédentes **caractérisé par le fait que** la calotte du piston est munie d'une conformation en creux (15) servant à canaliser le carburant injecté vers le moyen d'allumage de type bougie, de manière à créer des zones de richesse différentes dans la chambre de combustion et à obtenir une combustion stratifiée.

10. Dispositif de moteur selon l'une quelconque des revendications précédentes **caractérisé par le fait que** les deux extrémités de l'axe de piston (17) sont obturées (figure 16).

11. Dispositif de moteur selon l'une quelconque des revendications précédentes **caractérisé par le fait que** ledit compresseur volumétrique pour l'air pur est utilisé à bas régime et se trouve relayé par un compresseur de type « turbo » dès que le débit des gaz d'échappement est suffisant pour entraîner ce dernier.

12. Dispositif de moteur selon l'une quelconque des revendications précédentes **caractérisé par le fait que** les canaux (5) par lesquels l'air en provenance du compresseur arrive aux lumières d'admission (4) ont chacun une conformation donnée destinée à orienter les flux des veines gazeuses.

13. Dispositif de moteur selon l'une quelconque des revendications précédentes **caractérisé par le fait que** les segments sont immobilisés en rotation par des ergots (16) placés dans leur gorge.
